# EUROPEAN PATENT APPLICATION

(11) **EP 2 338 327 A1**
(43) Date of publication of application: **29.06.2011**
(21) Application number: 10002941.2
(22) Date of filing: 19.03.2010
(51) Int. Cl.: A01G 9/14, A01G 9/24

(54) **Water curtain cultivation system capable of geological circulation of groundwater and artificial recharge of rainwater**

(30) Priority: 22.12.2009 KR 20090129283
(71) Applicant: Korea Institute of Geoscience & Mineral Resources, Yuseong-Gu Daejeon City (KR)
(72) Inventor: Ko, Kyung Seok, Daejeon City (KR); Kim, Yong Cheol, Daejeon City (KR)
(74) Representative: Beier, Ralph

(57) **Abstract**

There is provided a water curtain cultivation system capable of a geological circulation of groundwater and an artificial recharge of rainwater, whereby a groundwater shortage which might be caused by an excessive use of groundwater is prevented and whereby groundwater is used as a stable heat source in use of a geothermal heat of groundwater to greatly reduce heating bills incurred in relation to protected cultivation during winter.

The water curtain cultivation system according to the present invention comprises: a house (10) including: an inner house (11) installed on the ground to form an inner space, and the outer house (12) surrounding the inner house and installed to be spaced apart from an outside of the inner house to form a water curtain space (13) therebetween; a water curtain forming pipe (20) installed above the water curtain space in a length direction of the house, the water curtain forming pipe including: a plurality of holes or nozzles formed to allow groundwater supplied to an outside surface of the inner house to flow to form a water curtain thereon; a groundwater supplying unit (30) including: a groundwater supply hole (31) to supply the groundwater at a position proximate to the house where the groundwater is supplied to the water curtain forming pipe, and a groundwater supply pipe (32) with a groundwater supply pump (33) to supply the groundwater of the groundwater supply hole to the water curtain forming pipe; a groundwater returning unit (40) including: a groundwater collection and exchange channel (41) installed at a lower portion outside the inner house longitudinally, to collect the groundwater supplied from the water curtain forming pipe and used for the water curtain, a groundwater retrieval pipe (42) to move the groundwater collected in the groundwater collection and exchange channel, a groundwater return and storage tank (43) to store the groundwater moving through the groundwater retrieval pipe, a groundwater return hole (46) installed at a position proximate to the house and spaced apart from the groundwater supply hole, and a groundwater return pipe (44) including a returning pump to transfer the groundwater stored in the groundwater return and storage tank to the groundwater return hole; and a rainwater supplying unit (50) including: a rainwater collection channel (51) formed longitudinally at a lower position outside of the outer house, and a rainwater supply pipe installed to be operatively connected to the rainwater collection channel and the groundwater return and storage tank.

## Description

### [Technical Field]

The present invention relates to a water curtain cultivation system capable of a geological circulation of groundwater and an artificial recharge of rainwater, whereby a groundwater shortage which might be caused by an excessive use of groundwater is prevented and whereby groundwater is used as a stable heat source in use of a geothermal heat of groundwater to greatly reduce heating bills incurred in relation to protected cultivation system during winter.

### [Background Art]

In general, protected cultivation is to grow crops, such as vegetables, fruit trees and flowers, in buildings (hereinafter, referred to as 'greenhouse' or 'house'), such as vinyl/plastic greenhouses and glass greenhouses. Protected cultivation artificially forms the most suitable environments for growing of crops. Crops in greenhouses which are much nicer, compared with outdoor crops, are produced and shipped for sale for a short period. Consequently, protected cultivation results in the maximal profits and enables crops to be grown throughout the year. Therefore, it is well-known that protected cultivation is widely applied in farm areas.

In protected cultivation during winter, it is most important to maintain the optimum temperatures for crops. If an oil price increases, the burden of heating bills increases and this generally affects the protected cultivation.

To solve a problem on the burden of heating bills, a water curtain cultivation method has been used. The water curtain cultivation method uses groundwater maintaining a temperature of about 15°C always. In winter, groundwater is spread outside a greenhouse, to increase a temperature inside the greenhouse.

In the aforementioned conventional water curtain cultivation method using groundwater, the used groundwater is wasted through a waterway. In a case where groundwater is used for a long time, groundwater is excessively pumped so that a groundwater level generally lowers or groundwater is depleted. Then, it is necessary to bore a groundwater hole in another place or to deeply bore a groundwater hole.

To solve the aforementioned problems, Korean Patent Registration No. 888039 disclosing an apparatus for heating for a water curtain cultivation system and returning groundwater provides a method to prevent groundwater depletion by returning the groundwater used to form a water curtain underground.

However, in the technology provided in the apparatus for heating for the water curtain cultivation system and returning groundwater in Korean Patent Registration No. 888039, a groundwater hole formed to supply groundwater is used to form a water curtain and to return groundwater. Thus, a temperature of groundwater is not uniform or it is low so that it cannot be used for heating.

### [Disclosure]

### [Technical Problem]

Therefore, the present invention has been made to solve the above problems, and it is an aspect of the present invention to provide a water curtain cultivation system capable of a geological circulation of groundwater and an artificial recharge of rainwater, in which groundwater is used to form a water curtain for heating a greenhouse in winter and controlling an internal temperature of the greenhouse in summer but a decrease in groundwater level is prevented or groundwater depletion is prevented, thereby stably supplying groundwater and supplying groundwater of an almost uniform temperature.

### [Technical Solution]

In accordance with the present invention, the above and other aspects can be accomplished by a water curtain cultivation system capable of a geological circulation of groundwater and an artificial recharge of rainwater, comprising: a house including: an inner house installed on the ground to form an inner space, and the outer house surrounding the inner house and installed to be spaced apart from an outside of the inner house to form a water curtain space therebetween; a water curtain forming pipe installed above the water curtain space in a length direction of the house, the water curtain forming pipe including: a plurality of holes or nozzles formed to allow groundwater supplied to an outside surface of the inner house to flow to form a water curtain thereon; a groundwater supplying unit including: a groundwater supply hole to supply the groundwater at a position proximate to the house where the groundwater is supplied to the water curtain forming pipe, and a groundwater supply pipe with a groundwater supply pump to supply the groundwater of the groundwater supply hole to the water curtain forming pipe; a groundwater returning unit including: a groundwater collection and exchange channel installed at a lower portion outside the inner house longitudinally, to collect the groundwater supplied from the water curtain forming pipe and used for the water curtain, a groundwater retrieval pipe to move the groundwater collected in the groundwater collection and exchange channel, a groundwater return and storage tank to store the groundwater moving through the groundwater retrieval pipe, a groundwater return hole installed at a position proximate to the house and spaced apart from the groundwater supply hole, and a groundwater return pipe including a returning pump to transfer the groundwater stored in the groundwater return and storage tank to the groundwater return hole ; and a rainwater supplying unit including: a rainwater collection channel formed longitudinally at a lower position outside of the outer house, and a rainwater supply pipe installed to be operatively connected to the rainwater collection channel and the groundwater return and storage tank.

The rainwater supply pipe may further comprise a purifier to purify the rainwater, and the inner house may be formed in a multiple manner to form multiple water curtain spaces or to form multiple inner houses including an outer water curtain space.

### [Advantageous Effects]

As described above, in the water curtain cultivation system capable of a geological circulation of groundwater and an artificial recharge of rainwater according to the present invention, the groundwater used to form a water curtain is returned underground to prevent a groundwater level from lowering or prevent groundwater from being depleted. Therefore, since a groundwater hole may not be bored or it may not be formed deeply, the costs are reduced and the problems caused by the depletion of groundwater are solved.

Furthermore, since the groundwater supplying hole to supply groundwater and the groundwater returning hole to return the groundwater used in forming a water curtain are spaced apart from each other at a predetermined interval, the problem in that the temperature of groundwater is unstable is solved.

Furthermore, since rainwater is collected and the collected rainwater and the groundwater used in forming a water curtain are together supplied/returned underground, the problem in that the decrease in the groundwater level or the depletion of groundwater is solved. Consequently, it is possible to secure abundant groundwater and to decrease floods by reducing a surface runoff.

### [Description of Drawings]

These and other aspects and advantages of the present invention will become apparent and more readily appreciated from the following description of the embodiments, taken in conjunction with the accompanying drawings, in which:
FIG. 1 is a schematic perspective view illustrating a water curtain cultivation system capable of a geological circulation of groundwater and an artificial recharge of rainwater in accordance with an embodiment of the present invention;
FIG. 2 is a schematic sectional view illustrating the water curtain cultivation system of FIG. 1, in which groundwater is used for a water curtain and the groundwater used as the water curtain is collected to return underground;
FIG. 3 is a schematic sectional view illustrating the water curtain cultivation system of FIG. 1, in which rainwater is collected and supplied underground, together with the groundwater used as the water curtain; and
FIG. 4 is a schematic sectional view illustrating a water curtain cultivation system capable of a geological circulation of groundwater and an artificial recharge of rainwater in accordance with another embodiment of the present invention.

### [Brief description of reference numbers of major elements]

- 10:: house
- 11:: inner house
- 12:: outer house
- 13:: water curtain space
- 20:: water curtain forming pipe
- 30:: groundwater supplying unit
- 40:: groundwater returning unit
- 50:: rainwater supplying unit

### [Best Mode]

### [Mode for Invention]

The present invention will now be described more fully hereinafter with reference to the accompanying drawings, in which preferred embodiments of the invention are shown. It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

Accordingly, while example embodiments of the present invention are capable of various modifications and alternative forms, embodiments of the present invention are shown by way of example in the drawings and will herein be described in detail. It should be understood, however, that there is no intent to limit example embodiments of the invention to the particular forms disclosed, but on the contrary, example embodiments of the invention are to cover all modifications, equivalents, and alternatives falling within the scope of the invention.

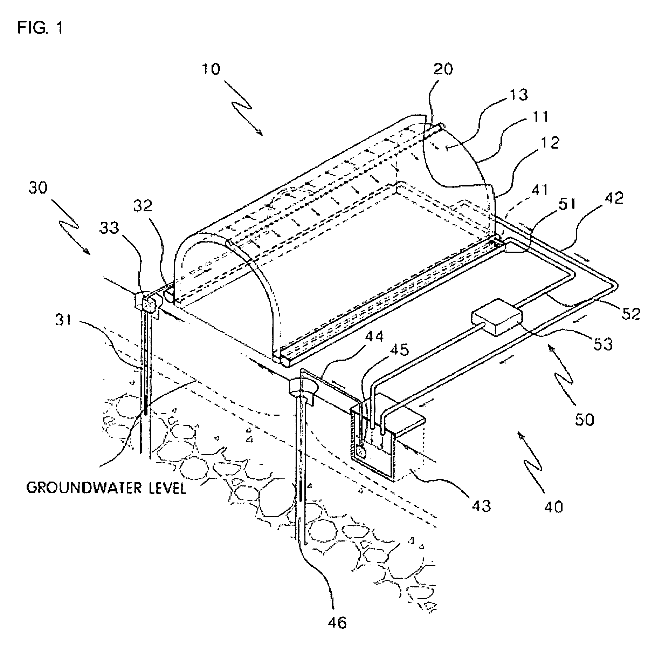

As illustrated in FIG. 1, a water curtain cultivation system capable of a geological circulation of groundwater and an artificial recharge of rainwater in accordance with the present invention comprises: a house 10 with an inner house 11 and an outer house 12 to form a water curtain space 13; a water curtain forming pipe 20 installed above the water curtain space 13, to supply groundwater to an outside surface of the inner house 11 so that a water curtain is formed; a groundwater supplying unit 30 to supply the groundwater to the water curtain forming pipe 20; a groundwater returning unit 40 to return the groundwater supplied from the water curtain forming pipe 20 and used as the water curtain underground; and a rainwater supplying unit 50 to supply rainwater falling to an outside surface of the outer house 12 underground.

The house 10 includes the inner house 11 and the outer house 12. The inner house 11 is installed on the ground and has an inner space to grow crops. The outer house 12 is installed to be spaced apart from the outside surface of the inner house 11, so that a space is formed between the inner house 11 and the outer house 12. The space is used as the water curtain space 13 to form the water curtain.

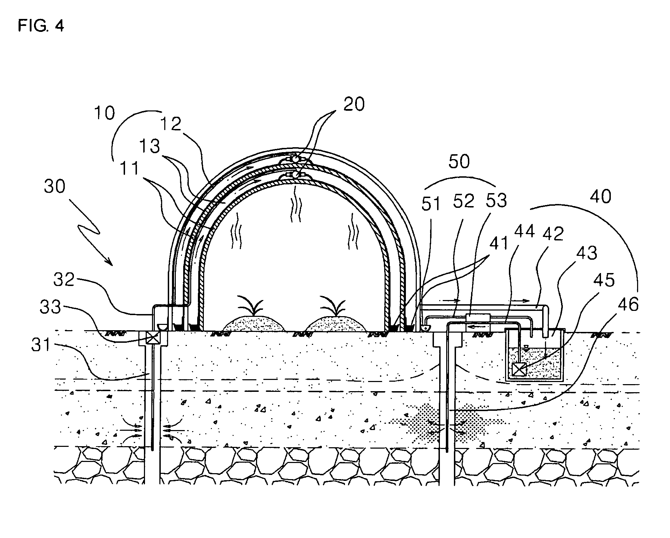

The inner houses 11 may be formed so that two water curtain spaces 13 are formed by another water curtain as shown in FIG. 4. Multiple water curtain spaces 13 may be formed by multiple inner houses 11. That is, multiple water curtain spaces 13 may be formed to have multiple water curtains. The other inner houses, except for the inner house having the outer water curtain space 13, may be formed as a general house having no water curtain spaces.

The water curtain forming pipe 20 installed above the water curtain space 13 forms the water curtain on the outside surface of the inner house 11 by using the groundwater supplied from the groundwater supplying unit 30.

The water curtain forming pipe 20 is installed to extend in a length direction of the house 10 and includes a number of holes or nozzles to form the water curtain on the outside surface 11 a of the inner house 11.

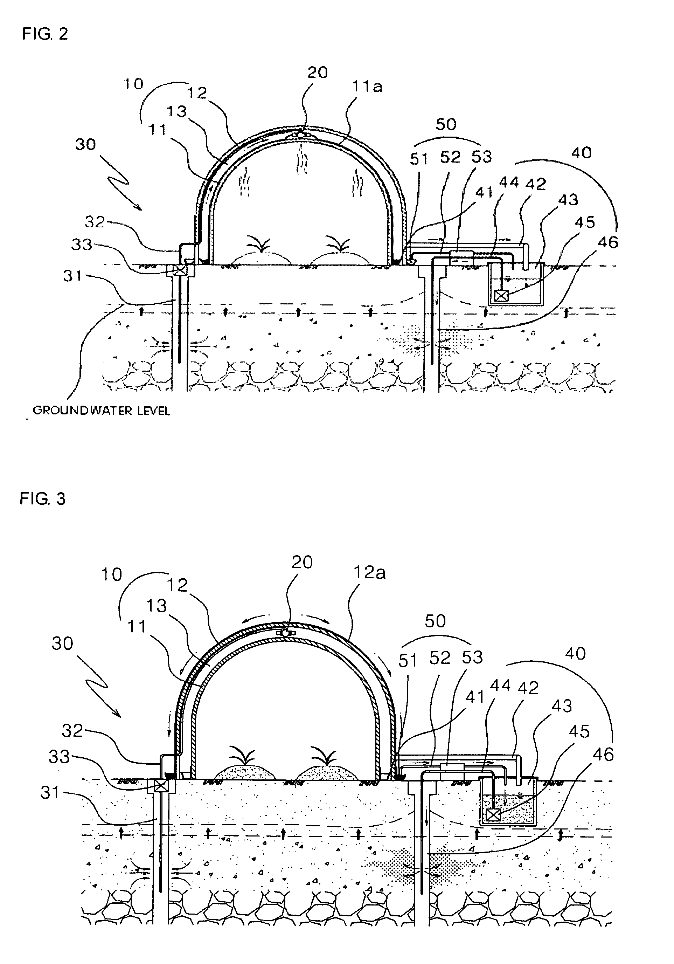

The water curtain forming pipe 20 has the holes or nozzles formed to supply the groundwater in both directions as shown in FIGS. 1 and 2.

The water curtain forming pipe 20 may be installed at lower positions of right and left sides of the water curtain space 13.

The groundwater supplying unit 30 is to supply the groundwater maintained at a temperature of 15°C all the times of the year to the water curtain forming pipe 20. The groundwater supplying unit 30 includes a groundwater supply hole 31 positioned proximately to the house, and a groundwater supplying pipe 32 including a groundwater supply pump 33 to move the groundwater to be supplied. The groundwater supply pump 33 is installed to be operatively connected to the groundwater supply hole 31 and the water curtain forming pipe 20.

The groundwater supply pump 33 generally uses a ground rotary pump or an underwater motor pump.

The groundwater returning unit 40 is to return the groundwater discharged from the water curtain forming pipe 20 and used for the water curtain. The groundwater returning unit 40 includes a groundwater collection and exchange channel 41 installed at a lower portion outside the inner house 11 longitudinally, to collect the groundwater used for the water curtain, a groundwater retrieval pipe 42 to move the groundwater collected in the groundwater collection and exchange channel 41, a groundwater return and storage tank 43 to store the groundwater moving through the groundwater retrieval pipe 42, and a groundwater return pipe 44 to transfer the groundwater stored in the groundwater return and storage tank 43 to a groundwater return hole 46.

The groundwater return and storage tank 43 may further comprise a groundwater return pump 45. The groundwater pumped by the groundwater return pump 45 is supplied to the groundwater return hole 46 through the groundwater return pipe 44.

The groundwater return pump 45 generally uses a drain pump.

When the groundwater return pump 45 is not installed, the groundwater is returned underground by gravity. When the groundwater return pump 45 is installed, the groundwater is returned underground by pressurization.

The groundwater return hole 46 is positioned to be spaced apart from the groundwater supply hole 31 of the groundwater supplying unit 30 at a predetermined distance.

When the groundwater return hole 46 is too far from the groundwater supply hole 31, since it takes a longer time for the groundwater exchanged through the groundwater return hole 46 to move to the groundwater of the groundwater supply hole 31, a groundwater shortage may occur.

When the groundwater return hole 46 is too close to the groundwater supply hole 31, since the groundwater exchanged through the groundwater return hole 46 is moved to the groundwater of the groundwater supply hole 31 without being heated, the temperature of the groundwater is not uniform or the temperature of the groundwater used for forming the water curtain is low.

That is, the distance between the groundwater supply hole 31 and the groundwater return hole 46 and the number of the groundwater supply holes 31 and groundwater return holes 46 may vary, depending on the environmental factors, such as the natural groundwater abundance and the hydraulic characteristics of soils and rocks in the area where the water curtain cultivation system is to be installed. The groundwater supply hole(s) 31 and the groundwater return hole(s) 46 may be installed at a rate of a single groundwater supply hole 31 to a plurality of the groundwater return holes 46, a plurality of the groundwater supply holes 31 to a single groundwater return hole 46, or a plurality of the groundwater supply holes 31 to a plurality of the groundwater return holes 46, depending on the aforementioned environmental factors. Therefore, it is preferable to determine the distance between the groundwater supply hole 31 and the groundwater return hole 46 and the number of the groundwater supply holes 31 and groundwater return holes 46 after inspecting the environmental factors of the installation area.

The rainwater supplying unit 50 collects the rainwater falling on the outer house 12 and supplies the collected rainwater underground. The rainwater supplying unit 50 comprises: a rainwater collection channel 51 formed in the length direction of collecting the rainwater falling on the outer house 12, and a rainwater supply pipe 52 to move the rainwater collected in the rainwater collection channel 51 to the groundwater return and storage tank 43. The rainwater supply pipe 52 further comprises a purifier 53 to purify the rainwater.

The rainwater collection channel 51 may be replaced by the groundwater collection and exchange channel 41, by installing a plate to guide the rainwater flowing along an outside surface 12a of the outer house 12 to flow into the groundwater collection and exchange channel 41.

The purifier 53 generally uses an aggregate material layer. Foreign matters contained in the rainwater are removed by passing the rainwater through the aggregate layer.

The groundwater supply pump 33, the groundwater return pump 45 and a valve (not shown) are generally controlled by a control panel (control unit) (not shown). The control panel (control unit) controls the groundwater supply pump 33, the groundwater return pump 45 and the valve, by receiving signals from a number of sensors (not shown), such as a temperature sensor and a groundwater level sensor.

In the water curtain cultivation system capable of a geological circulation of groundwater and an artificial recharge of rainwater according to the present invention,

the groundwater supply pump 33 of the groundwater supplying unit 30 is driven to pump the groundwater inside the groundwater supply hole 31, the pumped groundwater is supplied to the water curtain forming pipe 20 through the groundwater supply pipe 32, the groundwater supplied to the water curtain forming pipe 20 is supplied to the outside surface of the inner house 11 through the holes or nozzles and flows down to form the water curtain, the groundwater used for forming the water curtain is collected in the groundwater collection and exchange channel 41, and the collected groundwater is stored in the groundwater return and storage tank 43 through the groundwater retrieval pipe 42.

The groundwater stored in the groundwater return and storage tank 43 moves to the groundwater return hole 46 through the groundwater return pipe 44 and returns underground.

The groundwater returning underground moves under the ground and is preheated (heated). This groundwater moves to the groundwater supply hole 31 of the groundwater supplying unit 30 and is again pumped by the groundwater supply pump 33 to be used for forming the water curtain.

As the groundwater circulates in the aforementioned manner, the lack of groundwater caused by continuously pumping the groundwater is solved and the instability in a temperature of groundwater is solved.

Further, as the rainwater falling onto the outer house 12 is collected to be supplied underground, together with the returned groundwater, the level of groundwater is increased.

That is, since drain systems have been very well developed, rainwater is not sufficiently permitted underground. Thus, the level of groundwater is low or groundwater is depleted. However, these problems are solved by the rainwater supplying unit 50.

## Claims

1. A water curtain cultivation system capable of a geological circulation of groundwater and an artificial recharge of rainwater, the system comprising:
a house (10) including: an inner house (11) installed on the ground to form an inner space, and the outer house (12) surrounding the inner house (11) and installed to be spaced apart from an outside of the inner house (11) to form a water curtain space (13) therebetween;
a water curtain forming pipe (20) installed above the water curtain space (13) in a length direction of the house (10), to allow groundwater supplied to an outside surface of the inner house (11) to flow to form a water curtain thereon;
a groundwater supplying unit (30) including: a groundwater supply hole (31) to supply the groundwater at a position proximate to the house (10) where the groundwater is supplied to the water curtain forming pipe (20), and a groundwater supply pipe (32) with a groundwater supply pump (33) to supply the groundwater of the groundwater supply hole (31) to the water curtain forming pipe (20);
a groundwater returning unit (40) including: a groundwater collection and exchange channel (41) installed at a lower portion outside the inner house (11) longitudinally, to collect the groundwater supplied from the water curtain forming pipe (20) and used for the water curtain, a groundwater retrieval pipe (42) to move the groundwater collected in the groundwater collection and exchange channel (41), a groundwater return and storage tank (43) to store the groundwater moving through the groundwater retrieval pipe (42), a groundwater return hole (46) installed at a position proximate to the house (10) and spaced apart from the groundwater supply hole (31), and a groundwater return pipe (44) to transfer the groundwater stored in the groundwater return and storage tank (43) to the groundwater return hole (46); and
a rainwater supplying unit (50) to supply rainwater falling onto an outside surface of the outer house (12) to the groundwater return and storage tank (43) so that the rainwater is supplied to the groundwater return hole (46).

2. The water curtain cultivation system according to claim 1, wherein the rainwater supplying unit (50) includes: a rainwater collection channel (51) formed longitudinally at a lower position outside of the outer house (12), and a rainwater supply pipe (52) installed to be operatively connected to the rainwater collection channel (51) and the groundwater return and storage tank (43).

3. The water curtain cultivation system according to claim 2 wherein the rainwater supply pipe (52) further includes a purifier (53) to purify the rainwater.

4. The water curtain cultivation system according to claim 1, wherein the inner house (11) is formed in a multiple manner, to form multiple water curtain spaces or to form multiple inner houses including an outer water curtain space.

5. The water curtain cultivation system according to claim 1, wherein the groundwater return and storage tank (43) includes a groundwater return pump (45), and the groundwater pumped by the groundwater return pump (45) is moved to the groundwater return hole (46) through the groundwater return pipe (44).
